# EUROPÄISCHE PATENTSCHRIFT

(11) **EP 1 143 243 B1**
(45) Veröffentlichungstag und Bekanntmachung des Hinweises auf die Patenterteilung: **20.02.2008**
(21) Anmeldenummer: 01107999.3
(22) Anmeldetag: 29.03.2001
(51) Int. Cl.: G01N 30/60, B01D 15/08

(54) **Chromatographiesäule**
Chromatography column
Colonne de chromatographie

(30) Priorität: 06.04.2000 DE 10017756
(43) Veröffentlichungstag der Anmeldung: 10.10.2001
(73) Patentinhaber: Bitec GmbH, 66450 Bexbach (DE)
(72) Erfinder: Krumbholz, Ernst Rudolf, Dr., 57510 Holving (FR); Schirra, Norbert, 66333 Völklingen (DE)
(74) Vertreter: Bernhardt, Winfrid

(56) Entgegenhaltungen:
- EP-A- 0 008 921
- EP-A- 0 762 118
- US-A- 5 486 289

## Beschreibung

Die Erfindung betrifft eine Chromatographiesäule, bestehend aus einem Hohlzylinder, insbesondere von mindestens 200 mm Inndurchmesser und mindestens 300 mm Länge, der in einem Abschnitt des Zylinderraums die Packung der Chromatographiesäule enthält und in einem anderen Abschnitt des Zylinderraums mit dem Eluenten als Druckmittel gefüllt ist, wobei die beiden Abschnitte durch einen Kolben getrennt sind und eine Hindurchführung des unter hohem Druck herangeführten Eluenten durch den Kolben vorgesehen ist, deren Ausgang durch ein den Strom des Eluenten in eine Vielzahl kleiner Teilströme unterteilendes Element gebildet ist.

Eine solche Chromatographiesäule ist aus der DE-A-195 33 694 bekannt. Zu dem Kolben herangeführt wird der Eluent hier durch die Kolbenstange, die den mit dem Druckmittel gefüllten Abschnitt des Zylinderraumes durchragt. Der Kolben übt eine Kraft auf die Packung aus und verhindert damit, dass durch das Nachgeben der Packung im Laufe des Betriebs Hohlräume in der Packung entstehen. Zur Erzeugung von genügend Druck auf den Kolben ist in der DE-A-195 33 694 vorgeschlagen, dass die Druckquelle aus der Einspeisungspumpe der Chromatographiesäule besteht und der Kolben als Stufenkolben ausgestaltet ist oder der Eluent über ein in Strömungsrichtung hinter einer Abzweigung nach dem betreffenden Abschnitt des Zylinderraums angeordnetes Druckminderventil in die Chromatographiesäule eingeführt wird, so dass der Druck in dem genannten anderen Abschnitt des Zylinderraums höher ist als der Druck des durch die Kolbenstange herangeführten und durch den Kolben hindurchgeführten Eluenten.

Eine im Prinzip gleich arbeitende Chromatographiesäule ist bekannt aus der US-A-5 486 289. Bei dieser wird jedoch nicht die Außenseite des Kolbens mit Überdruck beaufschlagt, sondern der die Packung enthaltende Abschnitt des Zylinderraums ungeachtet des Durchflusses des Eluenten mit Unterdruck. Statt einer hohlen Kolbenstange ist eine flexible Zuführung für den Eluenten vorhanden; sie ist durch das eine, hier offene Ende des Zylinders gelegt.

Der Erfindung liegt die Aufgabe zugrunde, eine vereinfachte Vorrichtung zu schaffen.

Gemäß der Erfindung wird dieser Zweck bei einer Chromatographiesäule der eingangs bezeichneten Art dadurch erfüllt, dass der Eingang der Hindurchführung des Eluenten durch den Kolben unmittelbar nach dem genannten anderen Abschnitt des Zylinderraums hin geöffnet ist.

Die Hindurchführung des Eluenten durch den Kolben ist so aus dem Druckmedium gespeist.

Eine gesonderte Zuführung des Eluenten mittels einer Kolbenstange oder flexibler Zuführung ist nicht notwendig.

Wie sich erweist, reicht der aus den Strömungsverhältnissen sich ergebende Unterschied zwischen den Drücken vor und hinter dem Kolben für die Kraftausübung auf die Packung völlig aus. Wichtig ist vor allem, dass der Eluent den Kolben in einer Vielzahl möglichst gleichmäßig über die Kolbenfläche verteilter kleiner Teilströme verlässt und durch lückenloses Aufliegen des Kolbens auf der Packung in gleicher Form in die Packung eingeleitet wird und damit keine Kanalbildung in der Packung vorgibt.

Zweckmäßigerweise ist auch der Eingang der Hindurchführung des Eluenten durch den Kolben durch ein den Strom des Eluenten in eine Vielzahl kleiner Teilströme unterteilendes Element gebildet und überhaupt nur ein solches Element vorhanden, dergestalt, daß der Kolben nur aus einem Sieb oder einem zwischen zwei Siebplatten gehaltenen Filtergewebe oder -vlies o. dgl. besteht, das vorzugsweise mit einem als Führung an der Zylinderwand anliegenden Rahmen versehen ist.

Der erfindungsgemäß eingesetzte Kolben kann in der Ausgestaltung, daß auch der Eingang der Hindurchführung des Eluenten durch den Kolben durch ein den Strom des Eluenten in eine Vielzahl kleiner Teilströme unterteilendes Element gebildet ist, mit Vorteil auch in der Packung, ein- oder mehrfach, angeordnet werden. Er verhindert hier gleichfalls die Bildung von Kanälen und ähnlichen Hohlräumen jedenfalls insoweit, als sie sich nicht durch den Kolben hindurch fortsetzen können.
Diese Anordnung des Kolbens in der Packung ist unabhängig davon, ob auf der Packung ein gleicher Kolben angeordnet ist oder eine Anordnung nach dem Stand der Technik getroffen ist.

Um seine Funktion als Führung zu erfüllen, die das Sieb o. dgl. ohne Verkanten den Setzbewegungen der Packung folgen läßt, hat der Rahmen vorzugsweise eine Mantelfläche von der Form eines flachen, aber eben noch genügend hohen Zylinders. Zwei schmalere, in genügend Abstand voneinander angeordnete Anlageflächen wären gleichfalls denkbar.

Die Chromatographiesäule ist insbesondere für die präparative Chromatographie mit einer überkritischen oder flüssigen mobilen Phase vorgesehen, ersichtlich aber allgemein anwendbar.

Beispielsweise kommen auch kleine Chromatographiesäulen von z.B. 4 bis 10 mm Durchmesser für analytische oder halb-präparative Chromatographie in Betracht, in denen bisher kein Kolben auf der Packung angeordnet wurde.
Bei den kleineren Durchmessern sind ggf. auch einfachere Formen des Kolbens möglich, beispielsweise eine zylindrische Fritte oder nur ein Siebplättchen ohne besondere Führung an der Zylinderwand gegen Verkippen. Denkbar wäre auch die Kombination einer Siebplatte o.ä. mit einem lose aufgelegten zylindrischen Kolben, der eine oder mehrere Axialbohrung(en) vorzugsweise solchen Querschnitts aufweist, daß er einen etwas größeren Strömungswider-stand als die Siebplatte hat und daher eine Kraft auf die Siebplatte ausübt, die sie gerade-zuhalten sucht. Der Kolben könnte an seiner Unterseite eine Ausnehmung aufweisen und nur am Rand auf der Siebplatte aufliegen.

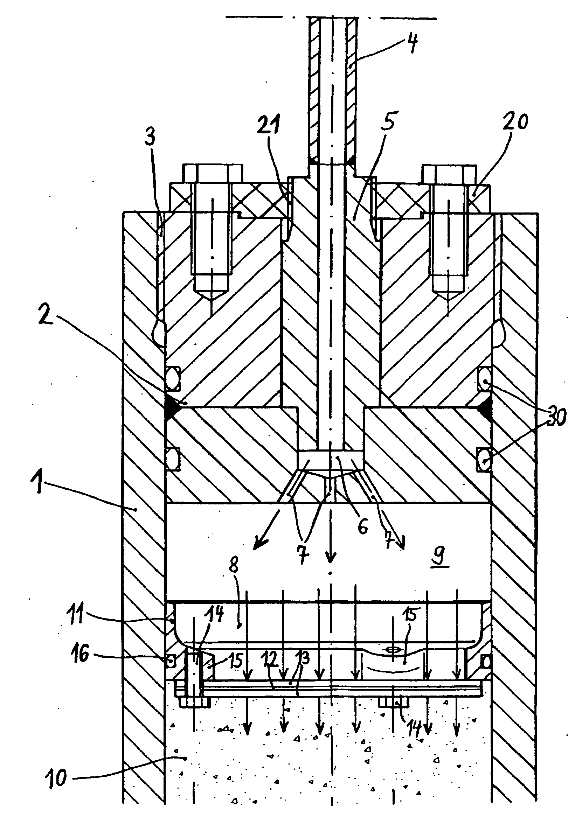

Die Zeichnung gibt ein Ausführungsbeispiel der Erfindung wieder.

Sie zeigt einen Abschnitt einer Chromatographiesäule in axialem Längsschnitt.

Ein Hohlzylinder 1 z.B. aus Edelstahl ist durch zwei Stirnwände abgeschlossen, von denen nur die eine Stirnwand 2 in der Zeichnung erscheint. Die Stirnwand 2 ist bei 3 mit dem Hohlzylinder 1 verschraubt und mittels Dichtringen 30 abgedichtet. Ein das Ende einer Zuleitung 4 bildendes, über eine an der Stirnwand 2 angeschraubte Platte 20 und eine Verschraubung 21 mit dieser gehaltenes Einsatzteil 5 mündet in eine in der Stirnwand 2 ausgebildete Druckkammer 6, aus der Austrittsbohrungen 7 in strahlenförmiger Ausrichtung herausführen.

Darunter befindet sich ein durch einen Kolben 8 begrenzter Zylinderraumabschnitt 9. Der Kolben 8 liegt auf der Packung 10 der Chromatographiesäule.

Der Kolben 8 besteht aus einem Rahmen 11 und einer Anordnung eines Filtergewebes 12 zwischen zwei Lochplatten 13, die stirnseitig an dem Rahmen 11 anliegt und durch drei Schrauben 14 mit dem Rahmen 11 verbunden ist. Die Schrauben 14 greifen in radiale Vorsprünge 15 des sonst im Querschnitt schmalen Rahmens. In Axialrichtung hat der, mit einer zylindrischen Außenfläche an der Innenwand des Hohlzylinders 1 anliegende, Rahmen 11 eine Erstreckung, mit der der Kolben 8 gegen Verkantung und Verklemmung gesichert ist. Ein in einer Umfangsnut des Kolbens 8 sitzender Dichtring 16 ist für die Funktion nicht unbedingt notwendig.

Der durch die Zuleitung 4, das Einsatzteil 5, die Druckkammer 6 und die Austrittsbohrungen 7 hindurch in den Zylinderraumabschnitt 9 eingeführte Eluent tritt, wie mit der Schar paralleler Pfeile verdeutlicht, durch die Lochplatten 13 und das Filtergewebe 12 des Kolbens 8 hindurch in die Packung 10, die er dann in Axialrichtung weiter durchströmt.

Infolge des durch den Kolben 8 gebildeten Strömungswiderstands herrscht in dem Zylinderraum 9 vor dem Kolben 8 ein etwas größerer Druck als in Strömungsrichtung hinter dem Kolben 8. Der Druckunterschied reicht aus, um den Kolben in satter Auflage auf der Packung zu halten und das Entstehen irgendwelcher Unregelmäßigkeiten an der Oberfläche der Packung zu verhindern. Die gleichmäßige Verteilung des Stromes über den freien Querschnitt des Rahmens 11 und damit im wesentlichen über den gesamten Querschnitt des Hohlzylinders 1 durch die Lochplatten 13 und das Filtergewebe 12 bringt von vornherein ein gleichmäßiges Strömungsprofil in die Packung, das Hohlraumbildungen vorbeugt. Dazu trägt auch schon die gleichmäßige Druckverteilung des Eluenten über den Querschnitt der Lochplatten 13 und des Filtergewebes 12 bei, die bei der Einführung des Eluenten durch die Kolbenstange in den Kolben nach dem Stand der Technik und die Ausbreitung innerhalb des Kolbens durch ein Kanalsystem nicht erreicht wird. Der Kolben 8 folgt der im Laufe der Zeit eintretenden Schrumpfung der Packung 10 von selbst.

Mit einer Anordnung eines gleichen oder ähnlichen Kolbens in der Packung, vornehmlich in deren oberem Bereich, kann an der betreffenden Stelle das Strömungsprofil noch einmal vergleichmäßigt werden, ggf. später noch einmal oder mehrmals.

## Patentansprüche

1. Chromatographiesäule,
bestehend aus einem Hohlzylinder (1),
der in einem Abschnitt des Zylinderraums die Packung (10) der Chromatographiesäule enthält und in einem anderen Abschnitt (9) des Zylinderraums mit dem Eluenten als Druckmedium gefüllt ist, wobei die beiden Abschnitte durch einen Kolben (8) getrennt
sind und eine Hindurchführung (12,13) des unter hohem Druck herangeführten Eluenten durch den Kolben (8) vorgesehen ist, deren Ausgang durch ein den Strom des Eluenten in eine Vielzahl kleiner Teilströme unterteilendes Element (12,13) gebildet ist,
**dadurch gekennzeichnet,**
**dass** der Eingang der Hindurchführung (12,13) des Eluenten durch den Kolben (8) unmittelbar nach dem genannten anderen Abschnitt (9) des Zylinderraums hin geöffent ist.

2. Chromatographiesäule,
bestehend aus einem Hohlzylinder (1),
der die Packung (10) der Chromatographiesäule enthält und von dem Eluenten durchflossen ist und einen Kolben (8) aufweist, wobei eine Hindurchführung (12, 13) des unter rohem Druck stehenden Eluenten durch den Kolben (8) vorgesehen ist, deren Ausgang durch ein des Strom des Eluenten in eine Vielzahl kleiner Teilströme unterteilendes Element (12,13) gebildet ist,
**dadurch gekennzeichnet,**
**daß** der kolben (8) in der Packung (10) angeordnet ist und auch der Eingang der Hindurchführung (12,13) des Eluenten durch den Kolben (8) durch ein den Strom des Eluenten in eine Vielzahl kleiner Teilströme unterteilendes Element gebildet ist.

3. Chromatographiesäule nach Anspruch 1.
**dadurch gekennzeichnet,**
**daß** auch der Eingang der Hindurchführung des Eluenten durch den Kolben (8) durch ein den Strom des Eluenten in eine Vielzahl kleiner Teilströme unterteilendes Element (12,13) gebildet ist.

4. Chromatographiesäule nach Anspruch 2 oder 3,
**dadurch gekennzeichnet,**
**daß** der Kolben (8) nur aus einem den Strom in eine Vielzahl kleiner Teilströme unterteilenden Element (12,13) besteht, das mit einem als Führung an der Zylinderwand anliegenden Rahmen (11) versehen ist.

5. Chromatographiesäule nach Anspruch 4,
**dadurch gekennzeichnet,**
**daß** das Element ein Sieb oder ein mindestens einseitig durch eine Siebplatte (13) gestütztes Filtergewebe (12) oder -vlies ist.

6. Chromatographiesäule nach Anspruch 4 oder 5,
**dadurch gekennzeichnet,**
**daß** der Rahmen (11) eine Mantelfläche von der Form eines flachen Zylinders hat.

7. Chromatographiesäule nach Anspruch 2 oder 3,
**dadurch gekennzeichnet,**
**daß** im Falle eines Säulendurchmessers unter 50 mm der Kolben (8) aus einem ohne Führung gegen Verkippen an der Zylinderwand anliegenden Sieb oder mindestens einseitig durch eine Siebplatte (13) gesfützten Filtergewebe (12) oder -vlies besteht.

8. Chromatographiesäule nach Anspruch 7,
**dadurch gekennzeichnet,**
**daß** auf dem Kolben (8) ein zylindrischer Kolben liegt, der eine oder mehrere Axialbohrung(en) aufweist und vorzugsweise einen etwas größeren Strömungswiderstand als das Sieb (13) oder Filtergewebe (12) oder -vlies hat.

9. Chromatographiesäule nach Anspruch 8,
**dadurch gekennzeichnet,**
**daß** der Kolben (8) eine Ausnehmung an seiner Unterseite aufweist derart, daß er nur am Rand auf dem Sieb (13) oder Filtergewebe (12) oder-vlies aufliegt.

10. Chromatographiesäule nach Anspruch 2 oder 3,
**dadurch gekennzeichnet,**
**daß** im Falle eines Säulendurchmessers unter 10 mm der Kolben (8) nur aus einer Fritte besteht.

## Claims

1. Chromatography column comprising a hollow cylinder (1) which contains the packing (10) of the chromatography column in a section of the cylindrical space and is filled with the eluent as pressure medium in a different section (9) of the cylindrical space, with the two sections being separated by a piston (8) and a passage (12, 13) through the piston (8) being provided for the eluent which is supplied under high pressure and the outlet of the passage being formed by an element (12, 13) which divides the stream of the eluent into a plurality of small substreams, **characterized in that** the inlet of the passage (12, 13) for the eluent through the piston (8) opens directly after the said different section (9) of the cylindrical space.

2. Chromatography column comprising a hollow cylinder (1) which contains the packing (10) of the chromatography column and through which the eluent flows and a piston (8), with a passage (12, 13) through the piston (8) being provided for the eluent which is under high pressure and the outlet of the passage being formed by an element which divides the stream of the eluent into a plurality of small substreams, **characterized in that** the piston (8) is arranged in the packing (10) and the inlet of the passage (12, 13) for the eluent through the piston (8) is also formed by an element which divides the stream of the eluent into a plurality of small substreams.

3. Chromatography column according to Claim 1, **characterized in that** the inlet of the passage for the eluent through the piston (8) is also formed by an element (12, 13) which divides the stream of the eluent into a plurality of small substreams.

4. Chromatography column according to Claim 2 or 3, **characterized in that** the piston (8) consists only of an element (12, 13) which divides the stream into a plurality of small substreams and is provided with a frame (11) which is located as a guide adjacent to the cylinder wall.

5. Chromatography column according to Claim 4, **characterized in that** the element is a screen or a filter cloth (12) or nonwoven supported on at least one side by a screen plate (13).

6. Chromatography column according to Claim 4 or 5, **characterized in that** the frame (11) has an outer surface in the form of a flat cylinder.

7. Chromatography column according to Claim 2 or 3, **characterized in that** in the case of a column diameter below 50 mm the column (8) comprises a screen located adjacent to the cylinder wall or filter cloth (12) or nonwoven supported on at least one side by a screen plate (13) without a guide to prevent tilting.

8. Chromatography column according to Claim 7, **characterized in that** a cylindrical piston which has one or more axial hole(s) and preferably a somewhat greater flow resistance than the screen (13) or filter cloth (12) or nonwoven rests on the piston.

9. Chromatography column according to Claim 8, **characterized in that** the piston (8) has a recess on its underside so that the piston rests on the screen (13) or filter cloth (12) or nonwoven only at the edge.

10. Chromatography column according to Claim 2 or 3, **characterized in that** in the case of a column diameter below 10 mm the piston (8) consists only of a frit.

## Revendications

1. Colonne de chromatographie, constituée par un cylindre creux (1), qui contient, dans une section de la chambre cylindrique, le garnissage (10) de la colonne de chromatographie et qui est remplie, dans une autre section (9) de la chambre cylindrique, avec l'éluant comme agent sous pression, les deux sections étant séparées par un piston (8) et un passage (12, 13) de l'éluant alimenté sous pression élevée dans le piston (8) étant prévu, dont la sortie est formée par un élément (12, 13) divisant le flux de l'éluant en une multitude de petits flux partiels, **caractérisée en ce que** l'entrée du passage (12,13) de l'éluant dans le piston (8) est ouverte directement vers l'autre section mentionnée (9) de la chambre cylindrique.

2. Colonne de chromatographie, constituée par un cylindre creux (1), qui contient le garnissage (10) de la colonne de chromatographie et qui est traversé par l'éluant et qui présente un piston (8), un passage (12, 13) de l'éluant sous pression élevée dans le piston (8) étant prévu, dont la sortie est formée par un élément (12, 13) divisant le flux de l'éluant en une multitude de petits flux partiels, **caractérisée en ce que** le piston (8) est disposé dans le garnissage (10) et l'entrée du passage (12, 13) de l'éluant dans le piston (8) est également formée par un élément divisant le flux d'éluant en une multitude de petits flux partiels.

3. Colonne de chromatographie selon la revendication 1, **caractérisée en ce que** l'entrée du passage de l'éluant dans le piston (8) est également formée par un élément (12, 13) divisant le flux de l'éluant en une multitude de petits flux partiels.

4. Colonne de chromatographie selon la revendication 2 ou 3, **caractérisée en ce que** le piston (8) n'est constitué que par un élément (12, 13) divisant le flux en une multitude de petits flux partiels (12,13) qui est pourvu d'un cadre (11) placé en tant que dispositif de guidage contre la paroi du cylindre.

5. Colonne de chromatographie selon la revendication 4, **caractérisée en ce que** l'élément est un tamis ou un tissu (12) ou un non-tissé de filtration soutenu au moins d'un côté par une plaque trouée (13).

6. Colonne de chromatographie selon la revendication 4 ou 5, **caractérisée en ce que** le cadre (11) présente une enveloppe cylindrique sous forme d'un cylindre plat.

7. Colonne de chromatographie selon la revendication 2 ou 3, **caractérisée en ce que**, dans le cas d'un diamètre de colonne inférieur à 50 mm, le piston (8) est constitué par un tamis placé sans guidage contre un basculement contre la paroi cylindrique ou par un tissu (12) ou un non-tissé soutenu au moins d'un côté par une plaque trouée (13).

8. Colonne de chromatographie selon la revendication 7, **caractérisée en ce que** sur le piston (8) est placé un piston cylindrique, qui présente un ou plusieurs trous axiaux et qui présente de préférence une résistance à l'écoulement un peu plus grande que le tamis (13) ou le tissu (12) ou le non-tissé de filtration.

9. Colonne de chromatographie selon la revendication 8, **caractérisée en ce que** le piston (8) présente sur sa face inférieure un évidement de telle manière qu'il ne se place sur le tamis (13) ou sur le tissu (12) ou le non-tissé de filtration qu'au niveau du bord.

10. Colonne de chromatographie selon la revendication 2 ou 3, **caractérisée en ce que** dans le cas d'un diamètre de colonne inférieur à 10 mm le piston (8) n'est constitué que par une fritte.
